# EUROPEAN PATENT SPECIFICATION

(11) **EP 3 601 831 B1**
(45) Date of publication and mention of the grant of the patent: **03.03.2021**
(21) Application number: 18715555.1
(22) Date of filing: 23.03.2018
(51) Int. Cl.: F16D 48/06

(54) **AUTOMATIC CLUTCH SYSTEM FOR A WORK MACHINE**
AUTOMATISCHES KUPPLUNGSSYSTEM FÜR EINE ARBEITSMASCHINE
SYSTÈME D'EMBRAYAGE AUTOMATIQUE POUR UNE MACHINE DE TRAVAIL

(30) Priority: 24.03.2017 IT 201700032736
(43) Date of publication of application: 05.02.2020
(73) Proprietor: CNH Industrial Italia S.P.A., 10135 Turin (IT)
(72) Inventor: GEIRHOFER, Michael, 3361 Aschbach (AT); PIROLA, Carlo, Giovanni, 4020 Linz (AT)
(74) Representative: CNH Industrial IP Department
(86) International application number: PCT/EP2018/057417
(87) International publication number: WO 2018/172512

(56) References cited:
- WO-A1-2005/078304
- DE-A1- 19 719 614
- DE-A1-102008 003 957

## Description

### BACKGROUND OF THE INVENTION

The present invention relates to work machines, and, more specifically to clutch arrangements and clutching methods associated with such work machines.

Work machines may be used in the agricultural, construction, industrial and forestry technology sectors, and are typically used to perform some type of work activity. A work machine in the form of an agricultural tractor is typically used to provide towing, Power Take-Off (PTO), and/or hydraulic power. For example, an agricultural tractor may be used to tow a wagon or a field cultivator, or can be simultaneously used for both towing and PTO power such as a baler, or can be used for only stationary PTO power such as a portable auger or a grinder-mixer, or can be used for hydraulic power such as hydraulic pumps and/or cylinders.

Work machines typically include a power unit in the form of an internal combustion (IC) engine. The IC engine may either be in the form of a compression ignition engine (i.e., diesel engine) or a spark ignition engine (e.g., gasoline engine). For most heavy work machines, the power unit is in the form of a diesel engine having better lugging, pull-down and torque characteristics for associated work operations.

Load impacts on an IC engine may be the result of a drivetrain load (e.g., an implement towed behind the work machine), an external load (i.e., a non-drivetrain load), or an auxiliary load. Parasitic loads are non-drivetrain loads placed upon an engine through normal operation of the work machine, without operator intervention (e.g., an engine cooling fan, hydraulic oil cooling circuit pump, etc.). Auxiliary loads are non-drivetrain loads placed upon an engine through selective operator intervention (e.g., an auxiliary hydraulic load such as an unloading auger on a combine, a front end loader, a backhoe attachment, etc.)

Clutches are typically used to engage or disengage the IC engine from the drivetrain, particularly the transmission. Clutches can be wet clutches or dry clutches and can be hydraulically or electro-hydraulically controlled, with the latter typically being under control of both a Vehicle Control Unit (VCU) and a Transmission Control Unit (TCU). Depressing the clutch pedal in the operator's cab causes a signal to be sent to the VCU, which in turns sends one or more signals to the TCU for controlling the clutch.

It is also known to automatically open (disengage) a clutch when an operator depresses a brake pedal in the operator cab. This type of automatic clutch is known by various names in the industry, such as "auto clutch" or "brake to clutch" or "stop and go". When driving off from Neutral to Forward or Reverse the operator needs to use the available clutch pedal. However, when braking to a standstill and restarting (or reversing) the main clutch is opened automatically just before standstill is reached and closes again when the brake pedal is released.

EP1655517B1, corresponding to US Patent No. 7,445,101, discloses an automatic clutch system in which the VCU receives output signals corresponding to each of 1) a forward/reverse shuttle lever position; 2) a brake pedal position, and 3) a vehicle speed. The vehicle speed signal can be used to determine if the vehicle is at a standstill, and when the brake pedal is released the clutch is actuated to move the vehicle in a forward or reverse direction. WO2005078304 discloses an automatic clutch system in which the clutch is controlled by sensing the brake pedal and sensing the torque on the clutch itself.

Typically, the vehicle speed is used as a threshold for activating automatic clutching. For instance, when driving below 2 km/h, the main clutch opens when pressing the brake pedal, to allow the clutch to open and the vehicle to come to a standstill without stalling the IC engine. A problem with the use of the vehicle speed is that when driving in a high gear, even at e.g. 9km/h, the engine may be below the low idle speed and still stall. It may be possible to increase the vehicle speed threshold but then with every gear the clutch opens at that vehicle speed. When driving downhill, pressing the brake pedal could open the main clutch at 9 km/h which could be undesirable.

### SUMMARY OF THE INVENTION

The invention in one form is directed to an automatic clutch system for clutching between an IC engine and a transmission of a work machine. The automatic clutch system includes at least one brake pedal, two brake indicators, an electrically controllable clutch, and at least one electrical processing circuit. Each brake indicator provides an output signal corresponding to a state of a corresponding brake pedal. The at least one electrical processing circuit is coupled with the two brake indicators and the electrically controllable clutch, and is adapted for receiving the brake indicator output signals and controlling the electrically controllable clutch, dependent on the brake indicator output signals. The automatic clutch system is characterized by an engine load indicator providing an output signal corresponding to a load state of the IC engine. The at least one electrical processing circuit is adapted for receiving the engine load indicator output signal and controlling the electrically controllable clutch, dependent on the engine load indicator output signal.

In one embodiment, the at least one electrical processing circuit is adapted to open the clutch when the engine load indicator output signal corresponds to an engine load which is above a threshold value.

In another embodiment, the threshold value is equal to approximately 30% of a peak engine load on the IC engine.

In yet another embodiment, the at least one electrical processing circuit includes a VCU, an Engine Control Unit (ECU) and a TCU. The ECU receives the output signal of the engine load indicator and communicates with the VCU. The VCU processes the output signal of the engine load indicator and the at least one brake indicator for controlling the electrically controllable clutch.

According to the invention, the at least one brake pedal is in the form of two brake pedals, and the at least one brake indicator is in the form of two brake indicators, with each brake indicator associated with a respective brake pedal. The at least one electrical processing circuit is adapted for opening the clutch when each of the brake pedals are simultaneously actuated.

In a still further embodiment, the automatic clutch system can further include a clutch pedal, and a clutch pedal sensor providing an output signal corresponding to a state of the clutch pedal. The at least one electrical processing circuit is adapted for controlling the electrically controllable clutch, dependent on the clutch pedal output signal.

In a still further embodiment, the at least one electrical processing circuit will not open the electrically controllable clutch if the clutch pedal output signal indicates that the clutch is fully depressed, and the clutch must be manually actuated by an operator.

In a still further embodiment, the clutch is considered to be fully depressed when the clutch pedal output signal is above a threshold value, such as an output signal indicating greater than 90% of a fully depressed clutch pedal.

In an additional embodiment, the work machine can include a vehicle speed sensor providing an output signal, and the at least one electrical processing circuit is adapted for controlling the electrically controllable clutch, dependent on the vehicle speed sensor output signal.

In an additional embodiment, the at least one electrical processing circuit will not open the electrically controllable clutch if the vehicle speed is above a threshold value, such as 20 Km/h.

In a further embodiment, the work machine includes a forward/reverse shuttle sensor providing an output signal corresponding to a state of a forward/reverse shuttle, and the at least one electrical processing circuit is adapted for controlling the electrically controllable clutch, dependent on the forward/reverse shuttle sensor output signal.

In a further embodiment, the electrically controllable clutch is an electro-hydraulic clutch.

In a further embodiment, the work machine comprises an agricultural tractor.

### BRIEF DESCRIPTION OF THE DRAWINGS

The above-mentioned and other features and advantages of this invention, and the manner of attaining them, will become more apparent and the invention will be better understood by reference to the following description of embodiments of the invention taken in conjunction with the accompanying drawings, wherein:

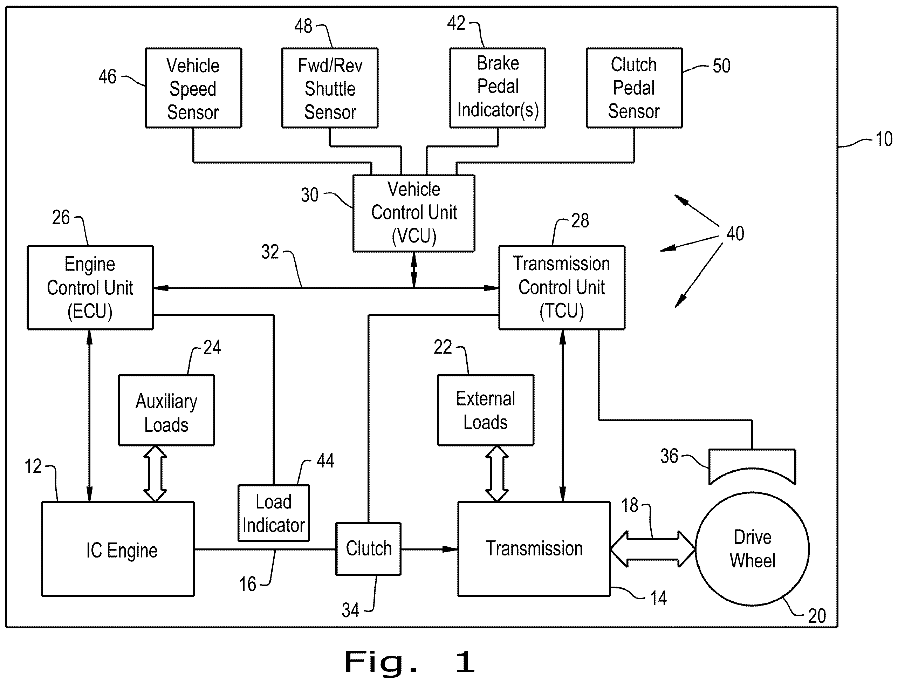

Fig. 1 is a schematic view of a work machine including an embodiment of an automatic clutch system of the present invention.

Corresponding reference characters indicate corresponding parts throughout the several views. The exemplifications set out herein illustrate embodiments of the invention, and such exemplifications are not to be construed as limiting the scope of the invention in any manner.

### DETAILED DESCRIPTION OF THE INVENTION

Referring now to Fig. 1, there is shown a schematic illustration of an embodiment of a work machine 10 of the present invention. Work machine 10 is assumed to be an agricultural work machine such as an agricultural tractor, but could be a different type of agricultural work machine, or a construction, forestry, mining or industrial work machine.

Work machine 10 includes an IC engine 12 which is coupled with a transmission 14, typically through an output crankshaft 16 from IC engine 12. IC engine 12 is assumed to be a diesel engine in the illustrated embodiment, but could also be a gasoline engine, propane engine, etc. IC engine 12 is sized and configured according to the application.

Transmission 14 may be of conventional design, and thus is not described in great detail herein. In the illustrated embodiment, transmission 14 is assumed to be a controllable electro-hydraulic transmission, but could be a different type of transmission. Transmission 14 has an output which is coupled with at least one other downstream drive train component 18, which in turn is coupled with a plurality of drive wheels 20, one of which is shown in Fig. 1. Of course, it will be appreciated that in the case of a track-type work vehicle, drive train component 18 may be coupled with a ground engaging track.

Transmission 14 can also provide output power to one or more external loads 22, which in turn thus provide an additional load on IC engine 12. External loads 22 typically are in the form of PTO or hydraulic loads, dependent on the type of work machine. For example, external loads 22 could be associated with a front end loader boom, bucket, backhoe hydraulic functions, grain unloading auger function, tree felling saw motor, etc. IC engine 12 can also provide power directly to auxiliary loads 24 such as a cooling fan or fans, air conditioning compressor, alternator, air compressor, or hydraulic pumps that provide power to non-implement functions. The total load placed upon IC engine 12 thus is a function of tractive loads, external loads and auxiliary loads.

The work machine 10 can include one or more electrical processing circuits, such as an ECU 26, TCU 28 and/or VCU 30. ECU 26 electronically controls operation of IC engine 12, and is coupled with a plurality of indicators and actuators (not specifically shown) associated with operation of IC engine 12. For example, ECU 26 may be coupled with indicators indicating engine control parameters such as an air flow rate within one or more intake manifolds, engine speed, crankshaft position, fueling rate and/or timing, exhaust gas recirculation (EGR) rate, coolant temperature, oil pressure, turbocharger blade position, etc. Additionally, ECU 26 may receive output signals from VCU 30 representing vehicle control parameters input by an operator, such as, e.g., a commanded ground speed using a ground speed actuator or a speed range using a speed range select lever. ECU 26 may be coupled with actuators that control fuel quantity, fuel injection timing, EGR valve position, etc.

Similarly, transmission control unit (TCU) 28 electronically controls operation of transmission 14, and is coupled with a plurality of indicators associated with operation of transmission 14. ECU 26 and TCU 28 are coupled together via a bus structure providing two-way data flow, such as CAN bus 32.

VCU 30 may receive input signals from various indicators, such as from load indicators associated with external loads 22 and auxiliary loads 24. Such signals can represent actual loads or allow calculation of external and auxiliary loads. Load values may be distributed to CAN bus 30.

Although the various electronic components such as ECU 26, TCU 28 and VCU 30 are shown coupled together using wired connections, it should also be understood that wireless connections may be used for certain applications.

Clutch 34 is an electrically controllable clutch which can be controlled for engagement and disengagement between IC engine 12 and transmission 14. The clutch 34 is typically under the control of TCU 28, but of course could also be under the control of ECU 26 and/or VCU 30 in some applications.

According to an aspect of the present invention, the work machine 10 can include an automatic clutch system, generally designated at reference number 40. The automatic clutch system 40 includes at least one electrical processing circuit (such as ECU 26, TCU 28 and/or VCU 30), the electrically controllable clutch 34, one or more brake indicators 42, and an engine load indicator 44.

The one or more brake indicators 42 can be configured as switches associated with a respective brake pedal (not shown) in the illustrated embodiment, but could be differently configured such as sensors, etc. Each brake indicator 42 provides an output signal corresponding to a state of a corresponding brake pedal. When the work machine 10 is configured as a tractor (such as assumed in the illustrated embodiment), the work machine typically includes two brake pedals which can be selectively or simultaneously depressed by an operator for braking and/or steering. Thus, in the illustrated embodiment, the work machine is assumed to have a pair of brake pedals and two brake pedal indicators 42 are provided to sense depressing of each respective brake pedal. When stopping, an operator typically places his foot to span between and simultaneously operate both brake pedals. Alternatively, most brake pedals can be provided with a latch that locks the movement of the two brake pedals together. Regardless, when an operator intentionally intends to slow down or stop the work machine 10, both brake pedals are depressed at the same time such that each brake pedal provides an output signal to the VCU 30. The VCU 30 can use the output signals from the brake pedal indicators 42 to determine that both brake pedals were simultaneously depressed and communicate with the TCU 28, which in turn can automatically engage or disengage the clutch 34. The output signals from the brake pedal indicators 42 can also be used to actuate the service brakes 36.

The engine load indicator 44 is positioned to sense an output load on the IC engine 12, and provide an output signal corresponding to a load state of the IC engine 12. In the illustrated embodiment, the engine load indicator is a sensor which is positioned in association with and assumed to sense an output torque associated with the engine crankshaft 16. The output torque can be used directly or converted to a load value to determine the load on the IC engine 12. As mentioned earlier, the total load on the IC engine 12 can result from tractive loads, external loads 22 and/or auxiliary loads 24. In another embodiment, the engine load indicator 44 can be a calculated value (by ECU 26 or VCU 30) using engine related parameters such as diesel injection data, engine RPM, etc.

The output signal(s) from the engine load indicator 44 can be transmitted to the ECU 26, which in turn can be in communication with the VCU 30 and/or TCU 28 for automatically controlling the clutch 34. In one embodiment, the VCU can receive the brake pedal indicator output signal(s) and the engine load indicator output signal and communicate with the TCU, which in turn controls the electrically controllable clutch 34. In another embodiment, the TCU 28 can be adapted for receiving the output signals from the brake pedal indicator(s) 42 and the engine load indicator 44 and controlling the electrically controllable clutch 34, dependent on output signals from each of the brake pedal indicator(s) and the engine load indicator. The TCU 28 can be adapted to open the clutch 34 when both of the brake pedals are depressed and when the engine load indicator output signal corresponds to an engine load which is above a threshold value. For example, the TCU 28 can open the clutch 34 when the threshold value is equal to approximately 30% of a peak engine load on the IC engine 12.

Use of the engine load indicator output signal during automatic clutching can be important under some operating conditions. For example, if the work machine is traveling down an incline with a light or heavy load such as a towed wagon or grain cart, it may not be desirable to open the clutch if the operator applies both brakes at the same time. Opening the clutch under this scenario could cause a free-wheeling situation which could actually increase the travel speed of the work machine as the towed implement pushes it down the incline. Maintaining the clutch closed allows the engine brake to help control the work machine speed, which is the behavior the operator would expect the work machine to do. Other situations where it may not be desirable to open the clutch under a light engine load are also possible. Thus, the TCU 28 can be adapted to only open the clutch 34 when the engine load is above a preselected threshold value and both brake pedals are depressed.

The automatic clutch system 40 can also include a vehicle speed sensor 46 which provides an output signal corresponding to the ground speed of work machine 10. The vehicle speed sensor 46 could be used in association with a hand or foot throttle, a foot operated pedal for a hydrostatic transmission, an optical camera used to determine ground speed, etc. The TCU 28 can be adapted for controlling the electrically controllable clutch 34, dependent on the vehicle speed sensor output signal. For example, the TCU 28 can be operated such that it will not open the electrically controllable clutch 34 if the vehicle speed is above a threshold value, such as 20 Km/h.

The automatic clutch system 40 can also include a forward/reverse shuttle sensor 48 which provides an output signal to the VCU 30 corresponding to a state of a forward/reverse shuttle (not specifically shown). Such forward/reverse shuttles are typically configured as a hand lever on the steering column which can be moved between forward, neutral and reverse positions, and change the direction of movement of the work machine without using the foot clutch. The VCU 30 can use the forward/reverse shuttle sensor output signal, or communicate the output signal with the TCU 28, which can be adapted for controlling the electrically controllable clutch 34, dependent on the forward/reverse shuttle sensor output signal. For example, the TCU 28 can be adapted to open the electrically controllable clutch 34 when the forward/reverse shuttle sensor output signal corresponds to the forward/reverse shuttle being in a forward movement position.

The automatic clutch system 40 can also include a clutch pedal sensor 50 providing an output signal to the VCU 30 corresponding to a state of a clutch pedal (not specifically shown). When the work machine 10 is configured as a tractor, the clutch pedal is typically configured as a foot pedal which is operated by the left foot of an operator. The clutch pedal sensor 50 can sense a position of the clutch pedal to determine when an operator has manually depressed the clutch pedal. The VCU 30 can use the clutch pedal sensor output signal, or communicate the output signal with the TCU 28, which can be adapted for controlling the electrically controllable clutch 34, dependent on the clutch pedal sensor output signal. For example, the TCU 28 can be adapted to not open the electrically controllable clutch if the clutch pedal output signal indicates that the clutch is fully depressed, and the clutch 34 must then be manually actuated by an operator using the clutch pedal. In one embodiment, the clutch can be considered to be fully depressed when the clutch pedal output signal is above a threshold value, such as an output signal indicating greater than 90% of a fully depressed clutch pedal.

It will be appreciated that while the term "sensor" or the like is used above to determine various states of system components, the term "sensor" is intended to encompass other ways of determining the relevant parameters. For example, the clutch pedal sensor could be configured as one or more switches associated with the clutch pedal, and the forward/reverse shuttle sensor could be configured as one or more switches associated with the forward/reverse shuttle.

## Claims

1. An automatic clutch system (40) for clutching between a combustion engine (12) and a transmission (14) of a work machine (10), the automatic clutching system (40) comprising:
two brake indicators (42), each brake indicator (42) being associated with a respective brake pedal and providing an output signal corresponding to a state of a corresponding brake pedal, each said brake indicator (42) configured to sense when the respective brake pedal is actuated;
an electrically controllable clutch (34);
at least one electrical processing circuit (26, 28, 30) coupled to the two brake indicators (42) for receiving the brake indicator output signals
an engine load indicator (44) providing an output signal corresponding to a load state of said engine (12);
said at least one electrical processing circuit (26, 28, 30) being adapted for receiving the engine load indicator output signal and controlling the electrically controllable clutch (34), dependent on the load indicator output signal and the brake indicator output signals,
and **characterized by**
said at least one electrical processing circuit (26, 28, 30) being adapted for opening the clutch (34) when both brake pedals are simultaneously actuated.

2. The automatic clutch system (40) of claim 1, wherein the at least one electrical processing circuit (26, 28, 30) is adapted to open the clutch (34) when the engine load indicator output signal corresponds to an engine load which is above a threshold value.

3. The automatic clutch system (40) of claim 2, wherein the threshold value is equal to approximately 30% of a peak engine load at current engine speed of said engine (12).

4. The automatic clutch system (40) according to claims 1 through 3, wherein after the clutch (34) is opened it stays open independently of the load state of the said engine (12), as long as the brake pedals are actuated.

5. The automatic clutch system (40) of claim 1 or 4, further including:
a clutch pedal sensor (50) providing an output signal corresponding to a state of a clutch pedal;
wherein the at least one electrical processing circuit (26, 28, 30) is adapted for controlling the electrically controllable clutch, dependent on the clutch pedal output signal.

6. The automatic clutch system (40) of claim 5, wherein the at least one electrical processing circuit (26, 28, 30) will not open the electrically controllable clutch if the clutch pedal output signal indicates that the clutch (34) has been fully depressed, and the clutch (34) must be manually actuated by an operator.

7. The automatic clutch system (40) of claim 6, wherein the clutch (34) is considered to be fully depressed when the clutch pedal output signal is above a threshold value, such as an output signal indicating greater than 90% of a fully depressed clutch pedal.

8. The automatic clutch system (40) of claim 1 or 4, wherein the work machine (10) includes a vehicle speed sensor (46) providing an output signal, and the at least one electrical processing circuit (26, 28, 30) is adapted for controlling the electrically controllable clutch (34), dependent on the vehicle speed sensor output signal.

9. The automatic clutch system (40) of claim 8, wherein the at least one electrical processing circuit (26, 28, 30) will not open the electrically controllable clutch (34) if the vehicle speed is above a threshold value.

10. The automatic clutch system (40) of claim 1 or 4, wherein the work machine (10) includes a forward/reverse shuttle sensor (48) providing an output signal corresponding to a state of a forward/reverse shuttle, and wherein the at least one electrical processing circuit (26, 28, 30) is adapted for controlling the electrically controllable clutch (34), dependent on the forward/reverse shuttle sensor output signal.

11. The automatic clutch system (40) according to one of the preceding claims, wherein the at least one electrical processing circuit (26, 28, 30) includes a vehicle control unit (VCU) (30), an Engine Control Unit (ECU) (26) and a Transmission Control Unit (TCU) (28), the ECU (26) receiving the output signal of the engine load indicator (44) and communicating with the VCU (30), the VCU (30) processing the output signal of the engine load indicator and the at least one brake indicator for controlling the electrically controllable clutch (34).

12. The automatic clutch system (40) according to claim 11, wherein the VCU (30) is in communication with the TCU (28), which in turn controls the electrically controllable clutch (34).

13. The automatic clutch system (40) according to one of the preceding claims, wherein the electrically controllable clutch (34) is an electro-hydraulic clutch.

14. An agricultural tractor comprising the automatic clutch system (40) according to one of the preceding claims.

## Patentansprüche

1. Automatisches Kupplungssystem (40) zum Kuppeln zwischen einem Verbrennungsmotor (12) und einem Getriebe (14) einer Arbeitsmaschine (10), wobei das automatische Kupplungssystem (40) umfasst:
zwei Bremsanzeigen (42), wobei jede Bremsanzeige (42) einem entsprechenden Bremspedal zugeordnet ist und ein Ausgabesignal bereitstellt, das einem Zustand eines entsprechenden Bremspedals entspricht, wobei jede der Bremsanzeigen (42) dazu eingerichtet ist, zu erfassen, wenn das jeweilige Bremspedal betätigt wird;
eine elektrisch steuerbare Kupplung (34);
zumindest einen elektrischen Verarbeitungsschaltkreis (26, 28, 30), der mit den zwei Bremsanzeigen (42) gekoppelt ist, um die Ausgabesignale der Bremsanzeigen zu empfangen
eine Motorlastanzeige (44), die ein Ausgabesignal bereitstellt, das einem Lastzustand des Motors (12) entspricht;
wobei der zumindest eine elektrische Verarbeitungsschaltkreis (26, 28, 30) dazu eingerichtet ist, das Ausgabesignal der Motorlastanzeige zu empfangen und die elektrisch steuerbare Kupplung (34) abhängig von dem Ausgabesignal der Motorlastanzeige und der Ausgabesignale der Bremsanzeigen zu steuern,
und **dadurch gekennzeichnet, dass**
der zumindest eine elektrische Verarbeitungsschaltkreis (26, 28, 30) dazu eingerichtet ist, die Kupplung (34) zu öffnen, wenn die Bremspedale gleichzeitig betätigt werden.

2. Automatisches Kupplungssystem (40) nach Anspruch 1, wobei der zumindest eine elektrische Verarbeitungsschaltkreis (26, 28, 30) dazu eingerichtet ist, die Kupplung (34) zu öffnen, wenn das Ausgabesignal der Motorlastanzeige einer Motorlast entspricht, die über einem Grenzwert liegt.

3. Automatisches Kupplungssystem (40) nach Anspruch 2, wobei der Grenzwert ungefähr gleich 30% einer Motorspitzenlast bei einer momentanen Motordrehzahl des Motors (12) ist.

4. Automatisches Kupplungssystem (40) nach den Ansprüchen 1 bis 3, wobei die Kupplung (34), nachdem sie geöffnet wird, unabhängig von dem Lastzustand des Motors (12) geöffnet bleibt, solange die Bremspedale betätigt werden.

5. Automatisches Kupplungssystem (40) nach Anspruch 1 oder 4, das des Weiteren umfasst:
einen Kupplungspedalsensor (50), der ein Ausgabesignal bereitstellt, das einem Zustand eines Kupplungspedals entspricht;
wobei der zumindest eine elektrische Verarbeitungsschaltkreis (26, 27, 28) dazu eingerichtet ist, die elektrisch steuerbare Kupplung abhängig von dem Ausgabesignal des Kupplungspedals zu steuern.

6. Automatisches Kupplungssystem (40) nach Anspruch 5, wobei der zumindest eine elektrische Verarbeitungsschaltkreis (26, 28, 30) die elektrisch steuerbare Kupplung nicht öffnet, wenn das Ausgabesignal des Kupplungspedals angibt, dass die Kupplung (34) vollständig gedrückt wurde, und die Kupplung (34) manuell von einer Bedienperson betätigt werden muss.

7. Automatisches Kupplungssystem (40) nach Anspruch 6, wobei die Kupplung (34) als vollständig gedrückt erachtet wird, wenn das Ausgabesignal des Kupplungspedals über einem Grenzwert liegt, wie zum Beispiel einem Ausgabesignal, das einen Wert von mehr als 90% eines vollständig gedrückten Kupplungspedals angibt.

8. Automatisches Kupplungssystem (40) nach Anspruch 1 oder 4, wobei die Arbeitsmaschine (10) einen Fahrzeuggeschwindigkeitssensor (46) umfasst, der ein Ausgabesignal bereitstellt, und wobei der zumindest eine elektrische Verarbeitungsschaltkreis (26, 28, 30) dazu eingerichtet ist, die elektrisch steuerbare Kupplung (34) abhängig von dem Ausgabesignal des Fahrzeuggeschwindigkeitssensors zu steuern.

9. Automatisches Kupplungssystem (40) nach Anspruch 8, wobei der zumindest eine elektrische Verarbeitungsschaltkreis (26, 28, 30) die elektrisch steuerbare Kupplung (34) nicht öffnet, wenn die Fahrzeuggeschwindigkeit über einem Grenzwert liegt.

10. Automatisches Kupplungssystem (40) nach Anspruch 1 oder 4, wobei die Arbeitsmaschine (10) einen Vorwärts-/Rückwärts-Schalthebelsensor (48) umfasst, der ein Ausgabesignal bereitstellt, das einem Zustand des Vorwärts-/Rückwärts-Schalthebels entspricht, und wobei der zumindest eine elektrische Verarbeitungsschaltkreis (26, 28, 30) dazu eingerichtet ist, die elektrisch steuerbare Kupplung (34) abhängig von dem Ausgabesignals des Vorwärts-/Rückwärts-Schalthebelsensors zu steuern.

11. Automatisches Kupplungssystem (40) nach einem der vorhergehenden Ansprüche, wobei der zumindest eine elektrische Verarbeitungsschaltkreis (26, 28, 30) eine Fahrzeugsteuereinheit (vehicle control unit; VCU) (30), eine Motorsteuereinheit (engine control unit; ECU) (26) und eine Getriebesteuereinheit (transmission control unit; TCU) (28) umfasst, wobei die ECU (26) das Ausgabesignal der Motorlastanzeige (44) empfängt und mit der VCU (30) kommuniziert, die VCU (30) das Ausgabesignal der Motorlastanzeige und der zumindest einen Bremsanzeige verarbeitet, um die elektrisch steuerbare Kupplung (34) zu steuern.

12. Automatisches Kupplungssystem (40) nach Anspruch 11, wobei die VCU (30) mit der TCU (28) kommuniziert, die wiederum die elektrisch steuerbare Kupplung (34) steuert.

13. Automatisches Kupplungssystem (40) nach einem der vorigen Ansprüche, wobei die elektrisch steuerbare Kupplung (34) eine elektrohydraulische Kupplung ist.

14. Landwirtschaftliche Zugmaschine mit dem automatischen Kupplungssystem (40) nach einem der vorhergehenden Ansprüche.

## Revendications

1. Système d'embrayage automatique (40) pour embrayer entre un moteur à combustion (12) et une transmission (14) d'un engin de travail (10), le système d'embrayage automatique (40) comprenant:
deux indicateurs de frein (42), chaque indicateur de frein (42) étant associé à une pédale de frein respective et émettant un signal de sortie correspondant à un état d'une pédale de frein correspondante, chacun desdits indicateurs de frein (42) étant configuré pour détecter l'activation de la pédale de frein correspondante;
un embrayage à commande électrique (34);
au moins un circuit de traitement électrique (26, 28, 30) relié aux deux indicateurs de frein (42) pour recevoir les signaux de sortie des indicateurs de frein;
un indicateur de charge du moteur (44) émettant un signal de sortie correspondant à un état de charge dudit moteur (12);
ledit au moins un circuit de traitement électrique (26, 28, 30) étant adapté pour recevoir le signal de sortie de l'indicateur de charge du moteur et pour commander l'embrayage à commande électrique (34), en fonction des signaux de sortie de l'indicateur de charge et de l'indicateur de frein,
et **caractérisé par**
ledit au moins un circuit de traitement électrique (26, 28, 30) étant adapté pour ouvrir l'embrayage (34) lorsque les deux pédales de frein sont activées simultanément.

2. Système d'embrayage automatique (40) selon la revendication 1, dans lequel l'au moins un circuit de traitement électrique (26, 28, 30) est adapté pour ouvrir l'embrayage (34) lorsque le signal de sortie de l'indicateur de charge du moteur correspond à une charge de moteur supérieure à une valeur seuil.

3. Système d'embrayage automatique (40) selon la revendication 2, dans lequel la valeur seuil équivaut à environ 30 % d'une charge de pointe du moteur au régime moteur considéré dudit moteur (12).

4. Système d'embrayage automatique (40) selon les revendications 1 à 3, dans lequel, après l'ouverture de l'embrayage (34), l'embrayage reste ouvert indépendamment de l'état de charge dudit moteur (12) tant que les pédales de frein sont activées.

5. Système d'embrayage automatique (40) selon les revendications 1 à 4, comprenant en outre:
un capteur de pédale d'embrayage (50) émettant un signal de sortie correspondant à un état d'une pédale d'embrayage;
dans lequel l'au moins un circuit de traitement électrique (26, 28, 30) est adapté pour commander l'embrayage à commande électrique, en fonction du signal de sortie de la pédale d'embrayage.

6. Système d'embrayage automatique (40) selon la revendication 5, dans lequel l'au moins un circuit de traitement électrique (26, 28, 30) n'ouvre pas l'embrayage à commande électrique si le signal de sortie de la pédale d'embrayage indique que l'embrayage (34) est complètement enfoncé, et l'embrayage (34) doit être activé manuellement par un opérateur.

7. Système d'embrayage automatique (40) selon la revendication 6, dans lequel l'embrayage (34) est considéré comme étant complètement enfoncé lorsque le signal de sortie de la pédale d'embrayage dépasse une valeur seuil, tel qu'un signal de sortie indiquant une valeur supérieure à 90 % d'une pédale d'embrayage complètement enfoncée.

8. Système d'embrayage automatique (40) selon la revendication 1 ou 4, dans lequel l'engin de travail (10) comprend un capteur de vitesse de véhicule (46) émettant un signal de sortie, et l'au moins un circuit de traitement électrique (26, 28, 30) est adapté pour commander l'embrayage à commande électrique (34), en fonction du signal de sortie du capteur de vitesse de véhicule.

9. Système d'embrayage automatique (40) selon la revendication 8, dans lequel l'au moins un circuit de traitement électrique (26, 28, 30) n'ouvre pas l'embrayage à commande électrique (34) si la vitesse du véhicule dépasse une valeur seuil.

10. Système d'embrayage automatique (40) selon la revendication 1 ou 4, dans lequel l'engin de travail (10) comprend un capteur d'inverseur de marche avant/arrière (48) émettant un signal de sortie correspondant à un état d'un inverseur de marche avant/arrière, et dans lequel l'au moins un circuit de traitement électrique (26, 28, 30) est adapté pour commander l'embrayage à commande électrique (34), en fonction du signal de sortie du capteur d'inverseur de marche avant/arrière.

11. Système d'embrayage automatique (40) selon l'une quelconque des revendications précédentes, dans lequel l'au moins un circuit de traitement électrique (26, 28, 30) comprend une unité de commande de véhicule (UCV) (30), une unité de commande de moteur (UCM) (26) et une unité de commande de transmission (UCT) (26), l'UCM (26) recevant le signal de sortie de l'indicateur de charge du moteur (44) et communiquant avec l'UCV (30), l'UCV (30) traitant le signal de sortie de l'indicateur de charge du moteur et de l'au moins un indicateur de frein pour commander l'embrayage à commande électrique (34).

12. Système d'embrayage automatique (40) selon la revendication 11, dans lequel l'UCV (30) est en communication avec l'UCT (28), qui commande à son tour l'embrayage à commande électrique (34).

13. Système d'embrayage automatique (40) selon l'une quelconque des revendications précédentes, dans lequel l'embrayage à commande électrique (34) est un embrayage électro-hydraulique.

14. Tracteur agricole comprenant le système d'embrayage automatique (40) selon l'une quelconque des revendications précédentes.
